Europäisches Patentamt

European Patent Office

Office européen des brevets

(11) Publication number: **0 151 098 B1**

# EUROPEAN PATENT SPECIFICATION

(45) Date of publication of patent specification: **23.10.91**  (51) Int. Cl.⁵: **B60B 39/00**

(21) Application number: **85850015.0**

(22) Date of filing: **15.01.85**

(54) Antiskid device with remote control.

(30) Priority: **17.01.84 SE 8400204**
**17.01.84 SE 8400205**

(43) Date of publication of application:
**07.08.85 Bulletin 85/32**

(45) Publication of the grant of the patent:
**23.10.91 Bulletin 91/43**

(84) Designated Contracting States:
**AT BE CH DE FR GB IT LI LU NL SE**

(56) References cited:
**US-A- 2 277 036**
**US-A- 2 790 514**

(73) Proprietor: **TÖRNEBÄCKS VERKSTÄDER KB**
**P.O. Box 1063**
**S-581 10 Linköping(SE)**

(72) Inventor: **Härdmark, Ragnar**
**Rosengatan 2**
**S-582 45 Linköping(SE)**

(74) Representative: **Onn, Thorsten et al**
**AB STOCKHOLMS PATENTBYRA Box 3129**
**S-103 62 Stockholm(SE)**

## Description

This invention relates to a device at remote control anti-skid device having a chain-provided pulley rotably fastened to a supporting movable arm that can bring said pulley in contact with a vehicle wheel to be rotated by this causing said chain-pieces successively to be thrown in under the vehicle wheel, thus improving the traction, said device being provided with adjustment means to allow adjustment of the working position of the pulley after intitial mounting of the device. The principle of this type of snow chains is simple per se, but in practice, it is regretfully not easy to obtain a perfect function. Apart from the so to speak pure mounting problems, i. e. how to get the backward and forward motion against the side of the wheel and where the pulley provided with chains is to be parked when not in operation etc. it is found in mounting that the position of the chain pulley or wheel relative to the vehicle wheel is relatively sensitive and the position or positions within which a perfect function is obtained can be both relatively difficult to define as well as difficult to reproduce, especially against the background of the relatively great manufacturing tolerances that may exist even between vehicles in the same series and of the same type. The final adjustment of automatical snow chains has therefore so far been combined with a relatively diligent filing and knocking at mounting details to achieve fairly correct conditions, and moreover, it has been a necessity to have well-trained people to ensure a correct function. Despite this one has not known if an optimal function has been obtained or not.

An attempt to solve some of the problems indicated above is shown in US-A-2 277 036. In this device the arm carrying the chain-provided pulley is provided with an elongate slot allowing an adjustment of the length of the arm and thereby the height at which the chain-provided pulley will contact the vehicle wheel. This device however only allows altering of the length of the arm and thus the height of the pulley. In reality however this adjustment is insufficient, a slight slide angle at the mounting of the device will result in a faulty location of the pulley even if the length of the arm is adjusted.

The truth is that the circumstances deciding whether a protection against skidding of this kind functions or not are considerably more complicated than what experts in this field have thought so far. It is the object of the invention to make clear the prevailing and desired conditions and to indicate a method and a device to enable an optimal function.

In order to ensure a good function it is important that always at least two chains are under the wheel. The contact surface of the wheel against the ground and the real radius of gyration of the chain wheel will decide in this way the required minimum number of chains. However, the number of chains must not be too great as the chains may then easily get entangled in one another. A suitable number of chains at truck wheels is 5-7 chains, conveniently 6.

Moreover the method by which the chains are moved in under the wheel is very essential. If the chains are thrown in too high they will bounce against the wheel and if they are thrown in too low a rebound against the ground is obtained, and both these phenomena result in a disturbed function (i.e. the chains do not get properly under the wheel). A suitable height is 7 cm at normal truck tyres.

The level of the thrown-in is one of the most important parameters of a good function. However, it must also be considered that the rotation of the chain pulley is actuated by the contact against the tyre side and by the motion of the chains under the wheel. The contact against the tyre side tends to increase the rotation and the contact under the wheel brakes the pulley. As, moreover, the chains are locked when they are under the wheel it is essential with a relatively symmetrical location of the chain pulley under the wheel axis, or, as an alternative, the pulley can be placed somewhat behind the wheel axis (which can give a reduction of the stresses). A suitable location is exactly under the centre to 1 cm behind.

It is the object of the invention to eliminate the above problems and to give a final adjusting possibility which, at the same time, must be rough, simple, cheap and not at least, anyone must be able to handle it after a very moderate instruction. The reason for this is that any workshop must be able to mount the automatical snow chain. In order to ensure a good function of the chain it is important that these are thrown in relatively exactly between wheel and ground both vertically and horizontally.

In order to solve this task said pulley is fastened to the end of the arm by means allowing adjustment of the working position of the pulley lengthwise of the vehicle and also allowing angle adjustment of the pulley in a verticle plane lengthwise of the vehicle.

Thus, in accordance with the inventive thought it is enough with these two instalment parameters to establish correct operational conditions at a final adjustment. Surprisingly enough it is thus sufficient with an adjustment of only two of the six positions and angle parameters of the chain pulley to achieve an optimal function. Therefore, in a suitable further development of the invention, the adjusting possibility of the chain pulley can be obtained by means of a T-shaped bolt arranged at the end of the movable arm in an elongate hole with toothed adges, in which a corresponding toothing on the lateral projections of the T-shaped bolt can engage, two cooperating washers with cylindrical surfaces are arranged at the other side of the elongate hole; one convex and the other concave. In this way a longitudinal (in the direction of the car)and angular adjustment can be obtained which is capable of giving a satisfactorey adjustment of the above-mentioned parameters. When tightening the nut on the T-shaped bolt the position of the pulley is locked longitudinally and anglularly. In order to reinforce this locking the convex washer has been provided with ridges on the upper and lower side which penetrate into the surrounding structure. In order further to secure the position of the bolt this can be pinned onto the sleeve. In a practical case it may simply be indicated for a given type of vehicle how high above ground the front or rear edge of the chain pulley is to be adjusted as well as where in the longitudinal direction of the vehicle wheel it is be be in contact with this. In this connection it should be mentioned that a possibility of a lengtwise adjustment of ± 1 cm and a moderate angle adjusting possibility are enough (and necessary).

Another problem is that usual chains when they are gripped between ground and wheel are exposed to twisting forces which in their turn result in that the chain tries to become shorter with accompanying stability disturbance of the vehicle (lateral throws) and a reduction of the frictional forces as the chain may roll under the wheel.

To solve this problem which means in practice that the chains move relative to the contact surface of the tyre and are more separated in this way it is certainly poosible to increase the number of chains so that the increased spreading is counteracted. However, this does not eliminate the lateral throws. Therefore chains are suggested according to the invention which are twisted. In this way lateral throws as well as chain rolling are eliminated without an increased number of chains being necessary.

Another problem is the fact that a slippery road often result in a water film on the side of the vehicle wheel and consequently it may easily happen that the chain pulleys supporting the chains are not put into rotation by the vehicle wheel as intended, as the thin intermediate water film on the vehicle wheel results in aquaplaning of the chain pulleys.

This problem is solved by giving the periphery of the pulley a cross section of such a small radius that it is capable of pressing away a possible water film on the side of the vehicle wheel in the contact surface between pulley and vehicle wheel.

Further advantages are obtained by the device being made in accordance with the characteristic features defined in the subclaims.

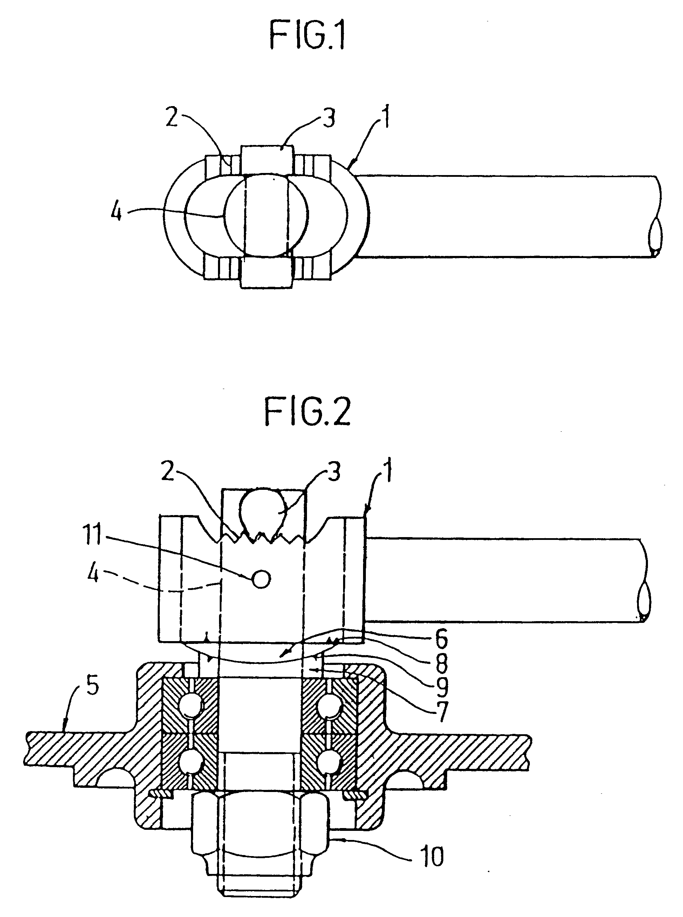

The invention will be described below more in detail in the form of an illustrative example in connection with the drawing, wherein Fig 1 shows the device of the invention as seen from above, Fig 2 shows a longitudinal section thereof and Fig 3 shows a perspective view from above of the chain wheel according to the invention, Fig 4 shows a perspective view of the same chain wheel as seen from below and Fig 5 shows schematically a chain wheel device according to the invention.

On the outer portion of the arm holding the chain pulley an oval sleeve 1 is attached which is provided with toothed flanks 2 supporting a transversal beam 3, also toothed,of a bolt 4 which is motion centre of the chain wheel 5. Between the oval sleeve and the bearing of the chain wheel, two washers 6 and 7 are inserted, the mutual contact surface of which are cylinderically shaped with the transversal beam 3 as centre of radius of the rounding. The washer 6 has a ridge 8 on its upper side and a ridge 9 on its underside. After the chain being adjusted to correct position angularly and longitudinally the nut 10 holding the chain pulley is tightened, whereby its ridges engage with surrounding details and lock the position of the bolt 4. In order to lock the position of the bolt further a hole 11 is drilled in the oval sleeve and the bolt,after adjustment and tightening, in which hole a pin locking the position is inserted. The arm holding the chain wheel 5 is preferably elastic, e.g. by being made from spring steel or a similar material.

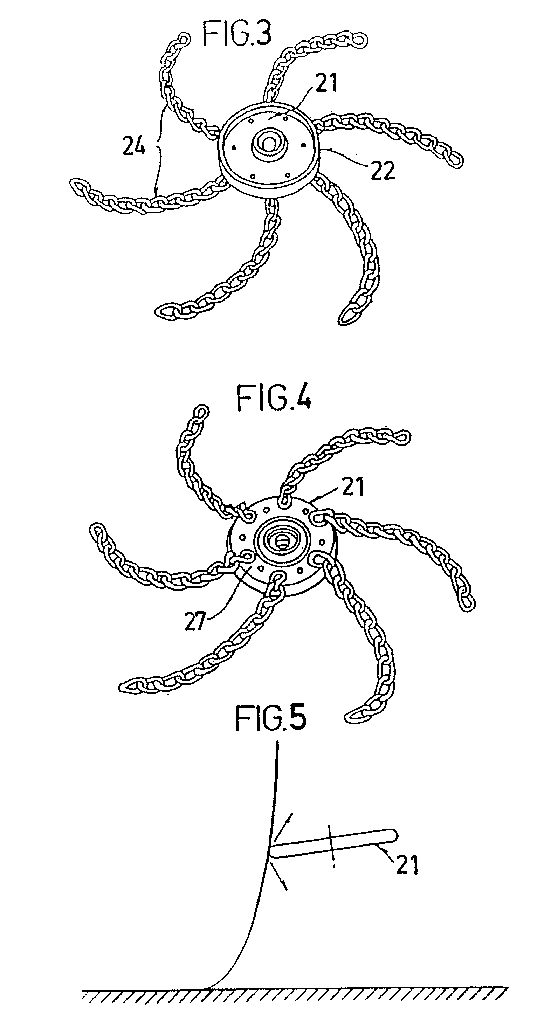

As is apparent from Figs 3-5 the chain supporting pulley comprises according to the invention an edge lining 22 arranged on the periphery of a wheel 21 cast of aluminum. The cross section of the edge lining 22 is made with such a small radius that a possible water film on the vehicle wheel can be pressed away by the edge lining upwards and downwards. On the underside of the aluminum wheel 21 a steel ring-shaped disc 27 is attached by means of rivets 30. On the underside of this steel ring chain pieces 24 are then welded. These are twisted and made of an angular profile and eliminate the possibility of lateral movement of the chain as a twisted chain is substantially dumb to further twisting, especially in the direction towards which it is twisted.

By making the pulley in the above way with an aluminum casting to which is riveted a steel disc carrying the chain pieces, the pulley will be light and further more it will not be distorted when the chains are welded to the disc.

As a consequence of the above the chains on the different sides of the vehicle are twisted in different directions, i.e. on one side twisted to the right and on the other side to the left.

As it may be difficult to see, when the chain pulley is in the correct position, i.e. the position giving a throw-in level of the chains of 7 cm above ground (7 cm ± 1 cm) a simple cardboard or plastic guide can be delivered with every set, which imitates the chain position when the pulley is in motion. The rule is preferably provided with simple means gripping the pulley or is held against this faciliating angle adjustment.

## Claims

1. Device at remote control anti-skid device having a chain-provided pulley (5) rotably fastened to a supporting movable arm that can bring said pulley in contact with a vehicle wheel to be rotated by this causing said chain-pieces (24) successively to be thrown in under the vehicle wheel, thus improving the traction, said device being provided with adjustment means to allow adjustment of the working position of the pulley after initial mounting of the device, **characterized in** that said pulley is fastened to the end of the arm by means allowing adjustment of the working position of the pulley lengthwise of the vehicle and also allowing angle adjustment of the pulley in a vertical plane lengthwise of the vehicle.

2. The device according to claim 1, **characterized in** that the chain-provided pulley (5) is mounted on a T-shaped bolt (4) with toothed laterally projecting arms and extending with it's center part through an elongate opening in the supporting arm, the elongated opening extending at the working position of the pulley in the direction of the vehicle the tooths of the side arms of the bolt co-operate with a toothing(2) extending along the sides of the opening in the arm, on the opposite side of the opening two washers (6, 7) with cylindrical interengaging surfaces are arranged with their generatrices perpendicular to the longitudinal direction of the vehicle and one of said interengageing surfaces being concave (7) and one convex (6), which surfaces are provided with toothings (9), ridges or the like so that at tightening the bolt (4) a longitudinal position in the opening as well as an angular one relative the arm can be fixed.

3. The device of any of the claims 1-2, **characterized in** that the bolt (4) is secured in correct position after mounting by a hole (11) being drilled through the bolt in line with a hole in the material around the elongated hole and that a pin is inserted into the drilled hole.

4. The device of any one of the claims 1-3, **characterized in** that the chain pulley (5) is arranged at the end of an arm which is elastic, e.g. because it is made of spring steel.

5. The device of any one of claims 1-4, **characterized in** that the periphery of the pulley (5) has a track cross section with such a small radius of curvature that it is capable of pressing away a possible water film on the side of the vehicle pulley in the contact surface between pulley and vehicle wheel.

6. The device of any of claims 1-5, **characterized in** that the chain pieces attached to the pulley consist of twisted chains (24) of such a twisting that the chain becomes stiff longitudinally and in turning direction preventing the torque exerted by the driving or braking force of the vehicle wheel from turning or rolling the chain.

7. The device of claim 6, **characterized in** that the chains (24) for the different sides of the vehicle are twisted in opposite directions.

8. The device of any one of the preceding claims, **characterized in** that the links of the chain pieces (24) have an edged profile cross section e.g. a square one.

9. The device of any of the preceding claims **characterized in** that the chain means are attached to a ringshaped disc (27) which in turn is attached to the chain pulley.

10. The device of any of the preceding claims, **characterized in** that the number of chain pieces (24) is so great that at least two pieces always are under the contact surface of the tyre with the ground at the same time.

11. The device of any one of the preceding claims, **characterized in** that the pulley (5) is placed to be in contact with the vehicle wheel in an area which extends about one cm backwards from the centre.

12. The device of any one of the preceding claims, **characterized in** that it is so adjusted that the chain pieces (24) when in use hit the wheel periphery seven cm above ground.

## Revendications

1. Dispositif associé à un dispositif antidérapant télécommandé comportant une poulie (5) à chaînes fixée rotative sur un bras mobile de support susceptible d'amener ladite poulie au contact d'une roue de véhicule pour la faire tourner, ce qui a pour effet de projeter successivement lesdits morceaux de chaînes (24) sous la roue de véhicule, améliorant ainsi la traction, ledit dispositif étant équipé de moyens de réglage permettant de régler la position de travail de la poulie après montage initial du dispositif, **caractérisé** en ce que ladite poulie est fixée sur le bout du bras par des moyens permettant de régler la position de travail de la poulie dans le sens de la longueur du véhicule et permettant également le réglage angulaire de la poulie dans un plan vertical, dans le sens de la longueur du véhicule.

2.  Dispositif selon la revendication 1, **caractérisé** en ce que la poulie (5) à chaînes est montée sur un boulon en T (4) muni de bras dentés faisant saillie latéralement et dont la partie centrale s'étend à travers une ouverture allongée pratiquée dans le bras de support et s'étendant, en position de travail de la poulie, dans le sens du véhicule, que les dents des bras latéraux du boulon coopèrent avec une denture (2) s'étendant le long des bords de l'ouverture du bras et que, du côté opposé de l'ouverture, deux rondelles (6, 7) à surfaces cylindriques en prise sont disposées avec leurs génératrices perpendiculaires au sens de la longueur du véhicule, l'une (7) desdites surfaces en prise étant concave et l'autre (6) convexe, lesdites surfaces étant munies de dentures (9), nervures ou analogues, de sorte qu'en serrant le boulon (4), on peut fixer une position longitudinale dans l'ouverture, ainsi qu'une position angulaire par rapport au bras.

3.  Dispositif selon l'une des revendications 1 et 2, **caractérisé** en ce que l'on fixe le boulon (4) en position correcte, après montage, en perçant à travers le boulon un trou (11) aligné avec un trou pratiqué dans la matière entourant l'ouverture allongée et en insérant une goupille dans le trou ainsi percé.

4.  Dispositif selon une quelconque des revendications 1 à 3, **caractérisé** en ce que la poulie (5) à chaînes est disposée à l'extrémité d'un bras élastique, réalisé en acier à ressorts par exemple.

5.  Dispositif selon une quelconque des revendications 1 à 4, **caractérisé** en ce que la périphérie de la poulie (5) présente une section de roulement dont le rayon de courbure est suffisamment petit pour qu'elle puisse éliminer par pression un éventuel film d'eau formé sur le côté de la roue de véhicule dans la surface de contact entre poulie et roue de véhicule.

6.  Dispositif selon une quelconque des revendications 1 à 5, **caractérisé** en ce que les morceaux de chaînes fixés sur la poulie sont constitués par des chaînes tordues (24) d'une torsion telle que la chaîne se raidit longitudinalement et dans le sens de rotation, empêchant ainsi le couple exercé par la force d'entraînement ou de freinage de la roue de véhicule de faire tourner ou rouler la chaîne.

7.  Dispositif selon la revendication 6, **caractérisé** en ce que les chaînes (24) prévues pour les deux côtés différents du véhicule sont tordues en directions opposées.

8.  Dispositif selon une quelconque des revendications précédentes, **caractérisé** en ce que les maillons des morceaux de chaînes (24) présentent une section de profil à bords, par exemple une section carrée.

9.  Dispositif selon une quelconque des revendications précédentes, **caractérisé** en ce que les éléments de chaînes sont fixés sur un disque annulaire (27) fixé à son tour sur la poulie à chaînes.

10. Dispositif selon une quelconque des revendications précédentes, **caractérisé** en ce que le nombre de morceaux de chaînes (24) est suffisamment grand pour qu'au moins deux morceaux se trouvent toujours en même temps sous la surface de contact du pneu avec le sol.

11. Dispositif selon une quelconque des revendications précédentes, **caractérisé** en ce que la poulie (5) est disposée de manière à être en contact avec la roue de véhicule dans une zone qui s'étend d'environ un centimètre en arrière du centre.

12. Dispositif selon une quelconque des revendications précédentes, **caractérisé** en ce qu'il est réglé de manière que les morceaux de chaînes (24), en fonctionnement, frappent la périphérie de la roue sept centimètres au-dessus du sol.

**Patentansprüche**

1.  Anordnung bei ferngesteuerten Gleitschutzvorrichtungen mit einer kettenversehenen Rolle (5), die drehbar an einem beweglichen Stützarm befestigt ist, der die Rolle in Anlage mit einem von diesem angetriebenen Fahrzeugrad bringt, wobei die Kettenteile (24) nacheinander unter die Fahrzeugräder geschleudert werden und dadurch die Griffigkeit erhöhen, wobei die Anordnung mit Stellorganen versehen ist um die Arbeitslage der Rolle nach vorausgehender Anbringung der Anordnung zu korrigieren, dadurch **gekennzeichnet,** dass die Rolle am Ende des Armes mit Organen befestigt ist, die die Einstellung der Arbeitslage der Rolle in der Längsrichtung des Fahr- zeuges und auch die Winkeleinstellung der Rolle in einer Vertikalebene in der Längsrichtung des Fahrzeuges gestatten.

2. Anordnung gemäss Patentanspruch 1, dadurch **gekennzeichnet,** dass die kettenversehene Rolle (5) auf einem T-förmigen Bolzen (4) mit gezahnten, in Seitenrichtung sich streckenden Armen montiert ist, der sich mit seinem Mittelteil durch eine längliche Öffnung im Stützarm streckt, wobei die längliche Öffnung sich in Arbeitslage der Rolle in Fahrzeugrichtung erstreckt und wobei die Zähne der Seitenarme des Bolzens mit einer Verzahnung (2), die längs der Seiten der Öffnungen im Arme verläuft, zusammenwirken, zwei Schewiben (6, 7) mit zylindrischen im Eingriff stehenden Flächen mit ihren Generatrisen lotrecht zur längslaufenden Fahrzeugrichtung angeordnet sind, wobei eine der im Eingriff stehenden Flächen (7) konkav ausgeformt ist und die andere (6) konvex, und die Flächen mit Verzahnungen (9), Firsten oder ähnlichem versehen sind, sodass bei Anziehen des Bolzens (4) eine Lage in Längsrichtung in der Öffnung sowie eine Winkellage zum Arm festegelegt werden kann.

3. Anordnung gemäss einer der Patentansprüche 1 oder 2, dadurch **gekennzeichnet,** dass der Bolzen (4) in seiner korrekten Lage nach dem Anbringen befestigt wird indem ein Loch (11) durch den Bolzen mit einem Loch im Material um das längliche Loch fluchtend gebohrt ist, und dass ein Stift in das gebohrte Loch eingesetzt ist.

4. Anordnung gemäss einer der Patentansprüche 1 bis 3, dadurch **gekennzeichnet,** dass die Kettenrolle (5) am Ende eines Arnmes, der elastisch ist, bespielsweise da er aus Federstahl besteht, angeordnet ist.

5. Anordnung gemäss einer der Patentansprüche 1 bis 4, dadurch **gekennzeichnet,** dass der Umkreis der Rolle (5) einen Zugquerschnitt mit einem so kleinem Krümmungsradius aufweist, dass er einen möglicherweise vorhandenen Wasserfilm auf der Fahrzeugrollenseite in der Berührungsfläche der Rolle mit dem Fahrzeugrad fortpressen kann.

6. Anordnung gemäss einer der Patentansprüche 1 bis 5, dadurch **gekennzeichnet,** dass die an der Rolle befestigten Kettenglieder aus verdrehten Ketten (24) mit einer solchen Verdrehung bestehen, dass die Kette in Längsrichtung sich versteift und in der Drehrichtung verhindert, dass das beim Fahren oder Bremsen des Fahrzeugrades enststehende Drehmoment die Kette dreht oder rollt.

7. Anordnung gemäss Patentanspruch 6, dadurch **gekennzeichnet,** dass die Ketten (24) an den verschiedenen Fahrzeugseiten entgegengesetzt verdreht sind.

8. Anordnung gemäss einer der vorhergehenden Patentansprüche, dadurch **gekennzeichnet,** dass die Glieder der Kettenteile (24) einen kantenförmigen Querschnitt, z.B. einen quadratischen solchen aufweisen.

9. Anordnung gemäss einer der vorhergehenden Patentansprüche, dadurch **gekennzeichnet,** dass die Kettenorgane an einer ringförmigen Scheibe (27) befestigt sind, die ihrerseits an der Kettenrolle befestigt ist.

10. Anordnung gemäss einer der vorhergehenden Patentansprüche, dadurch **gekennzeichnet,** dass die Anzahl der Kettenteile (24) so gross ist, dass zumindetsens zwei Teile jeweils gleichzetig unter der Berührungsfläche des Reifens mit dem Boden liegen.

11. Anordnung gemäss einer der vorhergehenden Patentansprüche, dadurch **gekennzeichnet,** dass die Rolle (5) in Berührung mit dem Fahrzeugrad in einem Bereich, der ungefähr einen Zentimeter hinter der Mitte liegt, angeordnet ist.

12. Anordnung gemäss einer der vorhergehenden Patentansprüche, dadurch **gekennzeichnet,** dass sie dermassen eingestellt ist, dass die Kettenteile (24) bei Anwendung den Umfang des Rades sieben Zentimeter oberhalb des Bodens treffen.

# FIG.1

# FIG.2

FIG.3

FIG.4

FIG.5